# EUROPÄISCHE PATENTSCHRIFT

(11) **EP 2 992 249 B1**
(45) Veröffentlichungstag und Bekanntmachung des Hinweises auf die Patenterteilung: **10.04.2019**
(21) Anmeldenummer: 14716597.1
(22) Anmeldetag: 11.04.2014
(51) Int. Cl.: F16H 61/28, F16H 61/32

(54) **GETRIEBEAKTOR FÜR EIN KRAFTFAHRZEUGGETRIEBE SOWIE VERFAHREN ZUR STEUERUNG EINES GETRIEBEAKTORS**
GEAR ACTUATOR FOR A MOTOR VEHICLE TRANSMISSION AND METHOD OF CONTROLLING A GEAR ACTUATOR
ACTIONNEUR DE BOÎTE DE VITESSES POUR VÉHICULE AUTOMOBILE, ET PROCÉDÉ DE COMMANDE D'UN ACTIONNEUR DE BOÎTE DE VITESSES

(30) Priorität: 30.04.2013 DE 102013207871
(43) Veröffentlichungstag der Anmeldung: 09.03.2016
(60) Teilanmeldung: 16001244.9
(73) Patentinhaber: Schaeffler Technologies AG & Co. KG, 91074 Herzogenaurach (DE)
(72) Erfinder: EHRLICH, Matthias, 77815 Bühl (DE); KRETZ-BUSCH, Volker, 77833 Ottersweier (DE)
(86) Internationale Anmeldenummer: PCT/EP2014/057410
(87) Internationale Veröffentlichungsnummer: WO 2014/177366

(56) Entgegenhaltungen:
- DE-A1-102006 054 901
- DE-A1-102006 054 902
- DE-A1-102006 054 907
- DE-A1-102011 051 863
- US-A1- 2008 060 462

## Beschreibung

Die vorliegende Erfindung betrifft einen Getriebeaktor für Kraftfahrzeuggetriebe, sowie ein Verfahren zur Ansteuerung eines derartigen Getriebeaktors.

Unter einem erfindungsgemäßen Getriebeaktor ist insbesondere ein Getriebeaktor zu verstehen, welcher betätigend innerhalb eines Kraftfahrzeugs auf wenigstens eine der folgenden Einrichtungen: Fahrzeuggetriebe, Kupplung und Bremse betätigend wählend und/oder schaltend einwirkt.

Bekanntermaßen können die Gänge von Kraftfahrzeuggetrieben, wie beispielsweise automatisierten Schaltgetrieben (ASG), Parallelschaltgetrieben (PSG) bzw. Doppelkupplungsgetrieben (DKG) oder anderen ähnlichen Getrieben mittels eines Kraftfahrzeuggetriebeaktors ein- und ausgelegt werden, der dabei eine sogenannte äußere Getriebeschaltung bildet.

Beispielsweise ist es aus der DE 10 2004 038 955 A1 bekannt, genau einen Elektromotor in einem Kraftfahrzeuggetriebeaktor zu verwenden, um sowohl die Wählbewegungen, als auch die Schaltbewegungen im Getriebe durchzuführen. Ein entsprechender Getriebeaktor wird daher auch als 1-Motor-Getriebeaktor bezeichnet.

Ferner ist es aus der DE 10 2006 054 901 A1, welche alle Merkmale des Oberbegriffs des Anspruchs 1 offenbart der Anmelderin bekannt, diesen 1-Motor-Getriebeaktor so aufzubauen, dass eine Drehung eines Elektromotors als Antriebskraft für den Getriebeaktor in eine erste Richtung eine Schaltbewegung und eine entsprechende Bewegung des Elektromotors in die andere Richtung eine Wählbewegung der Schaltwelle des Getriebes bewirkt. Zum Schalten von einer Schaltbewegung in eine Wählbewegung weist der Getriebeaktor eine Verbindungseinrichtung auf, welche eine Spindelmutter mit entsprechenden Zahnstangen bzw. Zahnrädern zum Bewirken einer Schalt- bzw. Wählbewegung der Schaltwelle koppelt.

Auch aus der DE 10 2006 054 902 A1 ist ein 1-Motor-Getriebeaktor bekannt, mittels dem Gänge ein- und ausgelegt werden können. Der Elektromotor ist dafür mit einer Gewindespindel und einer Spindelmutter auf dieser Spindel verbunden. Die Spindelmutter weist mindestens zwei Zahnstangen auf. Je nach Verzahnung der Spindelmutter mit der Schaltwelle und axialer Bewegung der Spindelmutter können durch diese Eingriffe Gänge ein- oder ausgelegt werden.

Weiterhin offenbart. die US 2008/0060462 A1 einen 1-Motor-Getriebeaktor, welcher ohne eine axial bewegliche Spindelmutter auskommt. Dieser Aktor kann zwischen Wähl- und Schaltzuständen umgeschaltet werden.

Die Aufgabe der vorliegenden Erfindung liegt darin, einen Getriebeaktor, insbesondere einen 1-Motor-Getriebeaktor, in einer alternativen Bauform vorzustellen, welcher geeignet ist, ein automatisiertes Getriebe, wie ein PSG, ASG oder DKG zu betätigen. Er soll jeweils insbesondere sowohl für die Schalt-, als auch für die Wählbewegungen verwendbar sein. Die Umschaltung zwischen Schalt -und Wählbewegung soll möglichst bauteilarm ausgeführt sein.

Erfindungsgemäß wird daher ein Getriebeaktor gemäß Anspruch 1 vorgeschlagen.

Ein Verfahren zur Ansteuerung eines Getriebeaktors nach den Ansprüchen 1 bis 3 oder nach den Ansprüchen 1 bis 3 und wenigstens einem der Ansprüche 4 bis 11 ist Gegenstand des Anspruchs 12.

Bevorzugte Weiterbildungen sind Gegenstand der Unteransprüche.

Es wird also insbesondere ein Getriebeaktor, das heißt ein Getriebeaktor für eine Kraftfahrzeuggetriebeeinrichtung, vorgeschlagen. Dieser Getriebeaktor weist genau einen Motor auf, welcher eine Spindel antreibt. Hierfür kann zwischen dem Getriebeaktor und der Spindel ein Getriebe vorgesehen sein, wobei dieses Getriebe vorzugsweise eine Übersetzung von mindestens aufweist. Die Spindel selber ist in Wirkverbindung mit einer Spindelmutter. Die Spindelmutter ihrerseits ist mit einer Schaltwelle zur Betätigung der Getriebeeinrichtung des Kraftfahrzeugs gekoppelt. Die Spindelmutter kann dabei entweder axial entlang der Spindel verfahren werden, das heißt, sie kann eine translatorische Bewegung ausführen, oder sie kann um die Spindel herum verschwenkt werden, das heißt, eine rotative Bewegung ausführen. Über ein Getriebe zwischen der Spindelmutter und der Schaltwelle wird die Bewegung der Spindelmutter, das heißt die rotatorische oder translatorische Bewegung, in eine Wähl- oder Schaltbewegung der Schaltwelle umgewandelt. Hierbei wird beispielsweise eine rotatorische Bewegung der Spindelmutter in eine Verschwenkbewegung, das heißt eine Rotativbewegung, der Schaltwelle zum Schalten bzw. Auslegen eines Ganges umgewandelt werden, oder eine rotative Bewegung der Spindelmutter in eine translatorische Bewegung der Schaltwelle längs ihrer eigenen Achse umgewandelt werden.

Zur Umwandlung einer translatorischen Bewegung der Spindelmutter in eine Schaltbewegung der Schaltwelle weist der Getriebeaktor ein Getriebe auf, welches die Spindelmutter, wenigstens zwei erste Zahnräder und ein Wellenrad, welches mit der Schaltwelle verbunden ist, umfasst.

In einem ersten axialen Stellungsbereich der Spindelmutter auf der Spindel ist die Spindelmutter selber nur genau mit einem ersten Zahnrad gekoppelt. Über dieses eine Zahnrad wird dann die translatorische Bewegung der Spindelmutter in eine rotative Bewegung zunächst dieses Zahnrades und damit auch in eine entsprechende rotative Bewegung der Schaltwelle als Schaltbewegung umgewandelt.

Alternativ oder zusätzlich zu diesem Getriebe zur Umwandlung der translatorischen Bewegung der Spindelmutter in eine Schaltbewegung der Schaltwelle ist es vorgesehen, dass das Getriebe des Getriebeaktors, die Spindelmutter, ein Übersetzungszahnrad und zumindest einen Wähltopf umfasst. Der Wähltopf selber weist dabei eine periodische Bahnkurve, insbesondere in Form einer Aussparung über seinen Umfang, auf, welche mit der Schaltwelle wirkverbunden ist. Dieses Getriebe ist dabei so ausgestattet, dass es einen zweiten axialen Stellungsbereich der Spindelmutter auf der Spindel gibt, welcher von dem ersten Stellungsbereich verschieden ist, und in welchem die Spindelmutter so mit dem Wähltopf verbunden ist, dass eine rotative Bewegung der Spindelmutter in eine im Wesentlichen periodisch wiederkehrende Heb- und Senkbewegung der Schaltwelle als Wählbewegung resultiert.

Zur Umsetzung der translatorischen Bewegung der Spindelmutter in eine rotative Bewegung der Schaltwelle ist es vorteilhafter Weise vorgesehen, dass die beiden Zahnräder, auch als die beiden ersten Zahnräder bezeichnet, so voneinander entkoppelt sind, dass in dem ersten axialen Stellungsbereich immer nur genau ein Zahnrad in direkter oder indirekter Wirkverbindung mit der Spindelmutter ist. Je nach Zahnrad, welches mit der Spindelmutter in Wirkverbindung ist, wird dann eine rotative Schaltbewegung der Schaltwelle in die eine oder in die andere Richtung bewirkt. Dieser Aufbau von den beiden Zahnrädern und der Schaltwelle kann insbesondere so vorgesehen sein, dass beide Zahnräder in ein Wellenrad der Schaltwelle von im Wesentlichen entgegengesetzten Seiten eingreifen. Bei gleichem Drehsinn der einzelnen Zahnräder wird dann eine Rotation der Schaltwelle in unterschiedlichen Richtungen erzeugt. Entkoppelt sind die beiden Zahnräder dann insofern voneinander, dass sie jeweils frei in die eine oder andere Richtung rotieren können. Wird das eine Zahnrad über die Spindelmutter angetrieben, so kann das andere Zahnrad frei über die Kopplung mit der Schaltwelle mitrotieren. Eine Verbindung der beiden Zahnräder über die Spindelmutter ist dabei zu keinem Zeitpunkt gegeben. Es kann somit zu keiner Verspannung der Zahnräder untereinander führen. Die Entkopplung ist somit insbesondere als eine Entkopplung in Bezug auf die Spindelmutter zu verstehen.

Um jeweils zu gewährleisten, dass die Spindelmutter immer nur mit einem Zahnrad in Wirkverbindung steht, ist es vorgesehen, dass die Spindelmutter als Zahnstange mit einer Verzahnung ausgebildet ist, wobei sich die Verzahnung nur über einen Teilumfang der Spindelmutter umfangsmäßig so erstreckt, dass die Spindelmutter wenigstens zwei unterschiedliche Winkelpositionen einnehmen kann, in denen die Verzahnung bei einer translatorischen Bewegung der Spindelmutter ausschließlich in das eine oder das andere Zahnrad eingreift. Auf diese Weise könnten sich auch noch mehr Winkelpositionen ergeben, in denen die Zahnstange bzw. die Verzahnung der Spindelmutter in Bezug auf die Spindelmutter entkoppelte Zahnräder eingreift.

Wie geschildert, ist in dem ersten axialen Stellungsbereich der Spindelmutter das Getriebe des Getriebeaktors so ausgebildet, dass eine translatorische Bewegung der Spindelmutter in eine rotative Bewegung der Schaltwelle umgewandelt wird. In einer besonders bevorzugten Ausführungsform des Getriebeaktors ist es vorgesehen, dass hierfür eine Verdrehsicherung so bereit gestellt ist, dass die Spindelmutter in diesem ersten axialen Stellungsbereich gegenüber einem Gehäuse gegen Verdrehungen gesichert ist, das heißt abgestützt wird. Eine Rotation der Spindel führt dann in diesem ersten axialen Stellungsbereich immer in eine Axialbewegung der Spindelmutter. Weiterhin bevorzugt führt diese Axialbewegung nicht nur zu einer Betätigung der Schaltwelle über die geschilderten Zahnräder, sondern auch dazu, dass die Spindelmutter von dem ersten axialen Stellungsbereich in einen zweiten axialen Stellungsbereich bewegt wird, der außerhalb des ersten axialen Stellungsbereichs gelegen ist. Besonders bevorzugt ist das Getriebe des Getriebeaktors in diesem zweiten axialen Stellungsbereich dann so ausgebildet, dass die Spindelmutter in diesem zweiten axialen Stellungsbereich zumindest in einer ersten Drehrichtung der Spindel mit dieser mitdreht, ohne dabei gegenüber der Spindel axial zu wandern. Auf diese Weise kann vorteilhaft besonders einfach ein Schalten von einer Schaltbewegung der Schaltwelle im ersten axialen Stellungsbereich in eine Wählbewegung im zweiten axialen Stellungsbereich umgeschaltet werden. Dies geschieht automatisch durch die axiale Verlagerung der Spindelmutter, wobei die Schaltung dann abgeschlossen ist, wenn die Spindelmutter aus dem Wirkbereich der Verdrehsicherung des ersten axialen Stellungsbereichs herausbewegt wurde. Um auch wieder ein Schalten des Getriebes des Getriebeaktors von der Wählbewegung in die Schaltbewegung der Schaltwelle hinein zu ermöglichen, ist vorteilhafter Weise ein Freilauf vorgesehen, der die Spindelmutter in dem zweiten axialen Bereich auf der Spindel an einer rotativen Bewegung in einer zweiten Drehrichtung, die der ersten entgegengesetzt ist, hindert. Auf diese Weise kommt es durch eine Rotation der Spindel in die zweite Drehrichtung nicht zu einer Drehung der Spindelmutter, was bewirkt, dass sie axial entlang der Spindel bewegt wird, und so von dem zweiten axialen Stellungsbereich in den ersten axialen Stellungsbereich wieder hineinbewegt wird. Der Freilauf wirkt hier quasi als Verdrehsicherung.

Weiterhin ermöglicht der Freilauf vorteilhafter Weise auch, dass immer eine definierte Wählbewegung der Schaltwelle ermöglicht wird, da ausschließlich eine rotative Bewegung der Spindelmutter in der ersten Drehrichtung für eine Umwandlung in eine translatorische Auf-AbBewegung der Schaltwelle, was gleichbedeutend ist einer Heb- und Senkbewegung der Schaltwelle in Längsrichtung der Schaltwelle, zur Verfügung steht.

Um die Steuerung des Motors des Getriebeaktors korrekt durchführen zu können, ist ein Sensor vorgesehen, welcher ein Signal ausgeben soll, welches die axiale Position des Schalthebels der Schaltwelle bzw. der Schaltwelle selber repräsentiert und/oder um eine Schaltbewegung des Schalthebels in die richtige Richtung einleiten zu können, ein Signal ausgibt, welches direkt oder zumindest indirekt Auskunft über die Winkelstellung, das heißt über die umfangsmäßige Positionierung der Verzahnung der Spindelmutter ausgibt. Dieser Sensor ist dafür im Bereich des Übersetzungszahnrads der Spindelmutter, oder eines zwischen diesen Elementen und mit diesem gekoppelten Organs bereitgestellt und kann aus ihrer Stellung bzw. aus ihrer jeweiligen Bewegung ein entsprechendes Signal generieren. So kann das Signal für die axiale Stellung des Schalthebels verwendet werden, um die Auf- und Abbewegung der Schaltwelle zu unterbrechen, in dem der Motor gestoppt wird und/oder die Drehbewegung des Motors in die erste Richtung so lange durchgeführt wird, bis sowohl der Schalthebel in der richtigen Schaltgasse steht, als auch die Verzahnung der Spindelmutter so winkelmäßig orientiert ist, dass das Zahnrad in der ersten axialen Stellung bzw. in dem ersten axialen Stellungsbereich in Eingriff mit der Spindelmutter gebracht werden kann, welches so mit der Schaltwelle gekoppelt ist, dass der Schalthebel in Richtung des gewünschten Ganges bewegt wird. Insbesondere ist hierbei zu beachten, dass die Schaltwelle zwischen zwei Teilgetrieben bereitgestellt sein kann, und die Bewegung des Schalthebels in die eine Richtung das Einlegen eines Ganges im ersten Teilgetriebe und die Bewegung des Schalthebels in die andere Richtung das Einlegen eines Ganges im anderen Teilgetriebe bewirkt.

Es ist erfindungsgemäß ebenfalls vorgesehen, dass die Schaltwelle bzw. der Schalthebel in Kombination mit den Schaltschienen für die einzelnen Teilgetriebe eine Schaltkinematik in der Art eines Active Interlocks® nutzt. Das heißt, das Einlegen eines neuen Ganges bewirkt automatisch das unmittelbar vorherige Auslegen aller übrigen Gänge des gleichen Teilgetriebes. Hierdurch kann es zu keinen blockierenden Gangkombinationen in einem Teilgetriebe kommen. Zur Konstruktion dieser Active Interlock®-Kinematik wird auf die DE 10 2013 203 284 A1 verwiesen, die hiermit in Bezug auf den Aufbau der Geometrie der Schalthebel und Schaltschienen Bezug genommen.

Zur Umwandlung der rotativen Bewegung der Spindelmutter im zweiten axialen Stellungsbereich in eine translatorische bzw. axiale Bewegung der Schaltwelle ist ein Übersetzungszahnrad vorgesehen, welches mit einem weiteren Zahnrad, auch bezeichnet als zweites Zahnrad, verbunden ist, welches wiederum bevorzugt momentenschlüssig mit der Spindelmutter verbunden werden kann. Das Übersetzungszahnrad weist dabei vorteilhafter Weise ein Übersetzungsverhältnis von 2:1 zu einer Verzahnung auf, die vorzugsweise als Kronenrad ausgebildet n dem Wähltopf angeordnet ist. Hierdurch kann eine genauere Positionierung der Schaltwelle in axialer Richtung erreicht werden, da die axiale Änderung des Schalthebels mittels des Wähltopfs langsamer durchgeführt wird als bei einer 1:1-Übersetzung. Insgesamt wird durch die Rotation der Spindelmutter eine Rotation des Übersetzungszahnrads in gleicher Drehrichtung wie die Spindelmutter erzeugt. Durch das Eingreifen des Übersetzungszahnrad in das Kronenrad des Wähltopfs wird der Wähltopf in einer Ebene 90° versetzt zum Übersetzungszahnrad bzw. im Wesentlichen 90° versetzt zum Übersetzungszahnrad in Rotation versetzt, wobei besonders bevorzugt die Drehachse des Wähltopfs koaxial zur Achse der Schaltwelle verläuft bzw. bevorzugt mit dieser zusammenfällt. Die rotative Bewegung des Wähltopfs um die Schaltwelle herum wird mittels Führungsstiften, die durch eine periodische Bahnkurve des Wähltopfs hindurchgreifen und mit einer gehäusefesten Kulissenbahn verbunden ist, in eine Auf- und Abbewegung der Schaltwelle transformiert. Vorteilhafter Weise ist die Kulissenbahn dabei so ausgeführt, dass sie im Wesentlichen axial parallel zur Schaltwelle, das heißt koaxial zur Schaltwelle, verläuft. Die Führungsstifte unterliegen damit zwei Zwangsbedingungen, die eine Zwangsbedingung ist durch den Verlauf der Kulissenbahn vorgegeben und verhindert im Wesentlichen rotative Bewegungen der Schaltwelle, während die zweite Zwangsbewegung durch die Bahnkurve des Wähltopfs vorgegeben ist, welche sowohl umfangsmäßige, als auch axial verlaufende Anteile aufweist. Hierdurch wird eine Drehung des Wähltopfs in eine Axialbewegung der Führungsstifte und somit in eine Auf- und Abwärtsbewegung der, was gleichbedeutend ist einer Heb- und Senkbewegung der Schaltwelle in Längsrichtung der Schaltwelle, transformiert.

Es wird ausdrücklich darauf hingewiesen, dass erfindungsgemäß es auch vorgesehen sein kann, dass sich durch eine spezielle Orientierung der Kulissenbahn auch rotative und translatorische Bewegungsanteile der Schaltwelle für eine Schaltbewegung des Schalthebels überlagern können.

Während besonders bevorzugt mittels der Schaltwelle bzw. des Schalthebels auf der Schaltwelle Gänge in einem Getriebe eines Kraftfahrzeugs geschaltet werden können, ist es zusätzlich oder alternativ vorgesehen, dass mittels des Schalthebels auch eine Kupplung oder eine Bremse betätigt werden kann. Dieses kann zum Beispiel dadurch erreicht werden, dass in einem axialen Bereich auf der Schaltwelle statt einer Schaltschiene zum Schalten eines Ganges in einem Getriebe eine Schaltschiene oder allgemein ein Schaltelement zum Betätigen der Kupplung oder der Bremse bereitgestellt ist.

Zur Durchführung eines erfindungsgemäßen Schalt- und/oder Wählvorgangs bzw. zur Betätigung des erfindungsgemäßen Getriebeaktors ist des weiteren eine Steuerung zur Ansteuerung des Getriebeaktors vorgesehen. Diese Steuerung ist hierbei insbesondere als Steuerungsverfahren zur Ansteuerung des Getriebeaktors zu verstehen. Des weiteren kann auch eine Steuerungsanordnung bereitgestellt sein, welche diese Steuerung durchführt.

Hierbei soll insbesondere das Auslegen des bisherigen Ganges so erfolgen, indem der Getriebeaktor zunächst so angesteuert wird, dass er die Spindel in eine erste Richtung antreibt. Da die Spindelmutter an der Verdrehsicherung abgestützt ist und gegen Verdrehungen gesichert ist, wird sie dann axial auf der Spindel wandern und durch einen Eingriff mit einem Zahnrad die translatorische Bewegung der Spindelmutter in eine rotatorische Bewegung der Schaltwelle umführen. Durch die Drehung des Zahnrads wird die Schaltwelle und darüber der Schalthebel so verschwenkt, dass der eingelegte Gang ausgelegt wird und der Schalthebel in eine Neutralgasse verlagert wird.

Befindet sich nun der Schalthebel in der Neutralgasse, so wird gemäß der Steuerung der Schalthebel eine Gasse mit dem gewählten neuen Gang verfahren. Dies wird dadurch erreicht, dass der Motor so angesteuert wird, dass er die Spindel weiterhin in die erste Drehrichtung antreibt. Die Spindelmutter wird dabei aus dem zweiten axialen Stellungsbereich verlagert, so dass sie nicht mehr von der Verdrehsicherung abgestützt wird und beginnt sich in die erste Drehrichtung zu drehen. An dieser Stelle ist die Spindelmutter momentenschlüssig mit dem weiteren Zahnrad verbunden, welches in ein Übersetzungszahnrad eingreift, welches wiederum das Kronenrad des Wähltopfs antreibt und somit über eine Bewegung der Führungsstifte in der Bahnkurve des Wähltopfs und einer Kulissenbahn eine axiale Verlagerung des Schalthebels bewirkt. Zur Ansteuerung des Motors ist weiterhin ein Sensor vorgesehen, der ein Sensorsignal ausgibt. Dieses Sensorsignal wird durch die Steuerung so verarbeitet, dass die Stellung des Schalthebels in der Gasse des gewählten Ganges erkannt wird und entsprechend die Steuerung so verfährt, dass nun ein neuer gewählter Gang eingelegt wird.

Hierfür wird der Motor weiterhin so angesteuert, dass gemäß des Sensorsignals sowohl der Schalthebel in der Gasse des gewählten Ganges liegt, als auch die Verzahnung der Spindelmutter winkelmäßig so positioniert ist, dass sie mit dem Zahnrad in Eingriff gelangen kann, welches für ein Verschwenken des Schalthebels in die Richtung des Teilgetriebes bewirken kann, in welchem der neu gewählte Gang liegt. In Abhängigkeit von diesem Sensorsignal und der Ansteuerung des Motors wird die Drehrichtung des Motors nach Erreichen der beschriebenen Position umgedreht, so dass die Spindelmutter aufgrund des Freilaufs, welcher hier als Verdrehsicherung wirkt, an der Rotation gehindert wird und axial nun wieder in den ersten axialen Stellungsbereich hineinverlagert wird und dort über das mittels der Verzahnung ausgewählte Zahnrad ein Verschwenken des Schalthebels in Richtung des neuen gewählten Ganges bewirkt.

Auf diese Weise wird erreicht, dass alleine mittels des beschriebenen Sensors der Punkt ermittelt wird, an welchem die Drehrichtung des Motors umgedreht wird und eine Wählbewegung in eine Schaltbewegung umgestellt wird.

Es sei darauf hingewiesen, dass zusätzlich auch ein Sensor im Bereich des Motors bereitgestellt sein kann, welcher zumindest Auskunft über die Stellung der Spindel als solche geben kann. Gegebenenfalls erste Kombinationen mit dem zweiten Sensor, welcher die Winkelposition der Spindelmutter bzw. die genaue Stellung des Schalthebels vorgibt, kann dann das beschriebene Steuerungsverfahren zur Ansteuerung des Getriebeaktors durchgeführt werden.

Ein erfindungsgemäßer Getriebeaktor, der in der Erfindung aber nicht beschränkt ist und aus dem sich weitere erfindungsgemäße Merkmale ergeben können, ist in den folgenden Figuren dargestellt. Es zeigen:
- Figur 1a-1c: den Getriebeaktor in unterschiedlichen Schaltpositionen als Systemschaltbild,
- Figur 2a-2c: eine hintere Aufsicht auf einen Teil des Getriebeaktors gemäß den Figuren 1a-1c, und
- Figur 3a-3c: ein H-Schaltbild zur Abstraktion der Schaltbewegung.

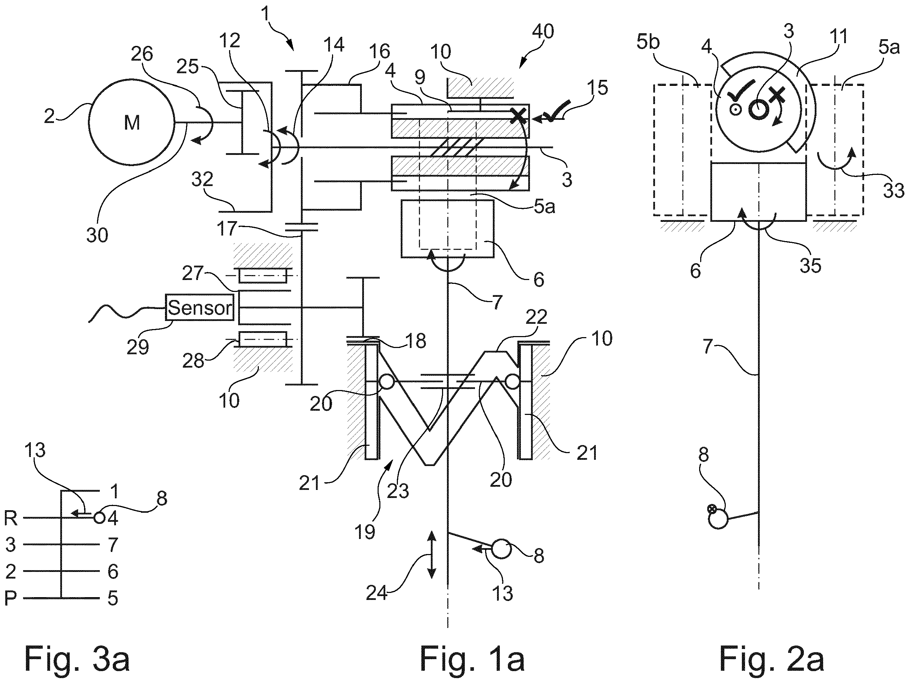

Die Figuren 1a bis 1c zeigen einen Getriebeaktor 1 in unterschiedlichen Stellungen bzw. beim Durchführen unterschiedlicher Verfahrensschritte zum Wählen bzw. Schalten eines neuen Ganges. Mittels eines Motors 2 wird eine Stirnradverzahnung 25 über eine entsprechende Rotorwelle 30 angetrieben. Je nach Drehrichtung des Motors 2 rotiert die Rotorwelle 30 dann in Drehrichtung 26, oder in die entgegen der Drehrichtung 31 und mit ihr entsprechend die Stirnradverzahnung 25. Die Stirnradverzahnung 25 greift dabei in eine Hohlradinnenverzahnung 32 ein, welche hier direkt eine Spindel 3 antreibt. Die Stirnradverzahnung 25 und die Hohlradinnenverzahnung 32 bilden dabei ein Getriebe mit einer Übersetzung von mindestens 1. Je nach Drehrichtung 26, 31 des Motors 2 dreht sich auch die Spindel 3 in eine erste Richtung 12, oder einer dieser entgegengesetzten zweiten Richtung 14.

Auf der Spindel 3 ist eine Spindelmutter 4 angeordnet. In Abhängigkeit von der Stemmung der Spindelmutter 4 auf der Spindel 3 ist die Spindelmutter 4 in Eingriff mit einem der Zahnräder 5a, 5b, auch bezeichnet als erste Zahnräder 5a, 5b. Die Figur 2a zeigt hierfür einen Schnitt durch die Anordnung des Getriebeaktors 1 aus der Rückenansicht. Die Spindelmutter 4 ist, wie in der Figur 2a dargestellt, als Zahnstange mit einer einseitigen Verzahnung 11 ausgebildet. Je nach Winkelposition der Spindelmutter 4 ist diese Verzahnung 11 in Eingriff mit dem Zahnrad 5a oder 5b. Beide Zahnräder 5a und 5b sind dabei fest mit einem Wellenrad 6 einer Schaltwelle 7 verzahnt. An der Schaltwelle 7 selber ist ein Schalthebel 8 angeordnet, der wenigstens einen Schaltfinger und mehrere Auswerfernocken umfasst. Die Auswerfernocken des Schalthebels 8 sind dabei so ausgebildet, dass sie in der Art eines "Active Interlocks"® mit hier nicht dargestellten Schaltschienen der Teilgetriebe interagieren können. Zur Wirkung solch eines Active Interlocks® und zum Aufbau solch eines Active Interlocks® wird hier auf die nicht veröffentlichte DE 10 2013 203 284 der Anmelderin verwiesen, auf deren Inhalt hierzu Bezug genommen wird.

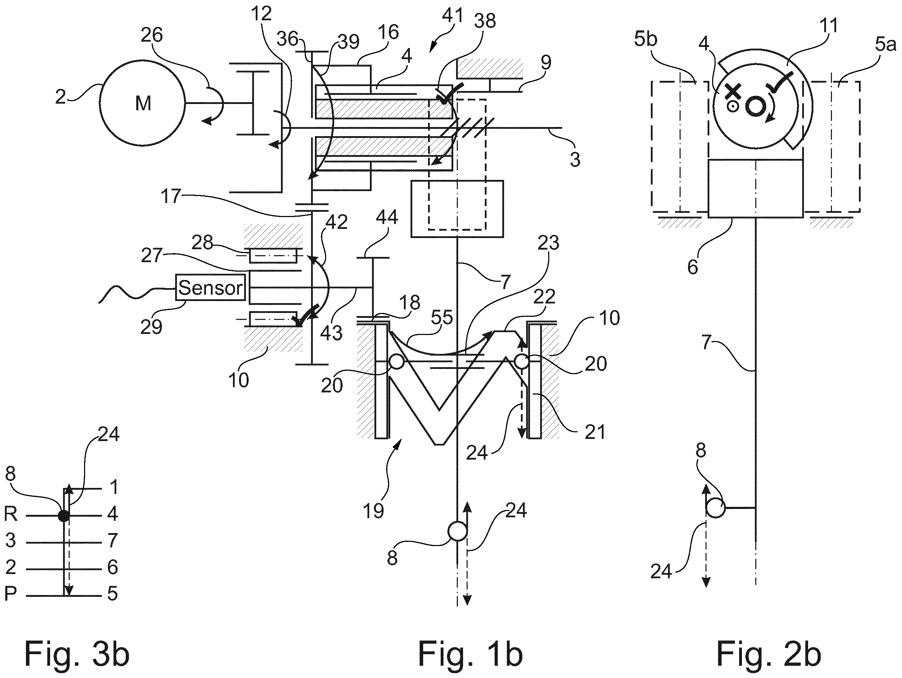

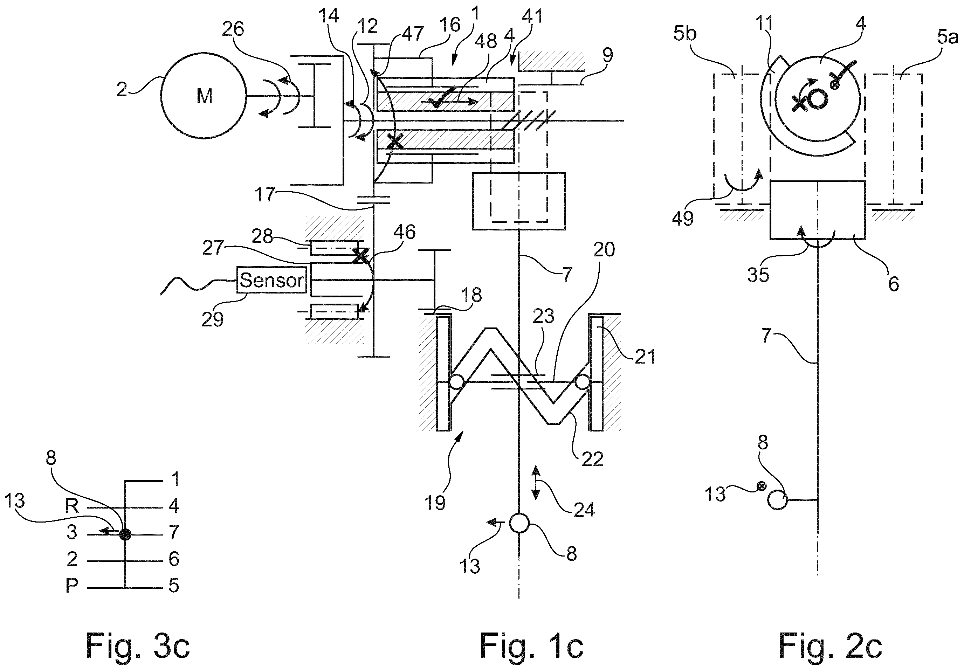

Über die Verzahnung 11 greift die Spindelmutter 4 je nach Winkelstellung immer nur in genau ein Zahnrad 5a oder 5b ein. In dem dargestellten Fall der Figur 2 greift die Verzahnung 11 in das rechte Zahnrad 5a ein. Eine axiale Verstellung der Spindelmutter 4 bewirkt dann bei einer Bewegung in Richtung 15 gemäß Figur 1a eine Drehung 33 des rechten Zahnrads 5a. Diese Drehung 33 resultiert dann in eine Drehung 35 des Wellenrads 6, wodurch der Schalthebel 8 in die erste Richtung 13 verschwenkt wird und so aus seinem eingelegten Gang ausgelegt wird. In der Figur 3a ist ein H-Schaltbild dargestellt, welches zeigt, dass in den Figuren 1a und 2a der Schalthebel 8 in einem Gang 4 eingelegt ist. Eine Drehung 35 des Wellenrads 6 bewirkt damit ein Auslegen des Schalthebels 8 in Richtung 13 aus dem Gang 4. In den Figuren 1a und 2a ist die Situation gezeigt, in der sich die Spindelmutter 4 in einem ersten axialen Stellungsbereich 40 der Spindel 3 befindet. Hier ist die Spindelmutter 4 an einer Verdrehsicherung in Form eines Abstützelements 9 gegen Verdrehungen gesichert. Das Abstützelement 9 ist dafür mit einem Gehäuse 10 fest verbunden. Eine Drehung des Motors 2 verursacht bei dieser Stellung immer eine axiale Bewegung der Spindelmutter 4. Eine Drehung in die erste Richtung 12 entspricht dabei einer axialen Bewegung 15 auf den Motor zu. Dieses verursacht dann durch den Eingriff zwischen der Verzahnung 11 und dem rechten bzw. ersten Zahnrad 5a die geschilderte Bewegung des Schalthebels 8. Gleichzeitig bewegt sich dabei die Spindelmutter 4 axial in Richtung 15 aus dem Wirkungsbereich des Abstützelements 9 heraus und gelangt in den Wirkungsbereich des Zahnrads 16, welches auch als weiteres oder zweites Zahnrad 16 bezeichnet wird. Da aber die Spindelmutter 4 in dem Bereich wo sie über das Abstützelement 9 gegen Verdrehungen gesichert ist noch nicht rotativ bewegt wird, bleibt das Zahnrad 16 stillstehend. Dieser Stillstand des Zahnrads 16 ist zumindest so lange gegeben, bis der Auslegevorgang des Schalthebels 8 bezüglich des Ganges 4, wie in der Figur 3a gezeigt ist, abgeschlossen ist. Nach Abschluss des Auslegevorgangs befindet sich der Schalthebel 8 in der neutralen Gasse. Er kann dann frei axial entlang der Schaltwelle 7 in Richtung der Wählbewegung 24, wie in der Figur 1a gezeigt, bewegt werden.

Erst wenn die Spindelmutter 4 vollständig aus dem ersten axialen Stellungsbereich 40 hinausgetreten ist und den Wirkkontakt mit dem Abstützelement 9 verloren hat, ist eine Wählbewegung 24 möglich, welche in den Figuren 1b, 2b und 3b dargestellt ist. Wie zu den Figuren 1a bis 3a beschrieben wurde, wird die Auslegebewegung des Ganges, das heißt die Verschwenkung des Schalthebels 8, mittels einer Rechtsdrehung des Motors 2 bewirkt. Hieraus resultiert auch eine Rechtsdrehung der Spindel 3 und damit eine axiale Verstellung der Spindelmutter 4 nach links in der Zeichnung. Mit dem Verlassen des ersten axialen Stellungsbereichs 40 wird die Spindelmutter 4 nicht mehr von dem Abstützelement 9 abgestützt und ist nicht mehr gegen Verdrehen gesichert. Spätestens wenn die Spindelmutter 4 an das Spindelmutterzahnrad 37 anstößt, verdreht es im gleichen Sinne und mit gleicher Geschwindigkeit wie die Spindel 3. Der Schalthebel 8 befindet sich dann in der Neutralgasse. Ohne Änderung der Motordrehrichtung 26 startet dann der Wählvorgang des Getriebeaktors 1. Der Motor 2 dreht weiter in Richtung 26, was, wie beschrieben, in einer Rechtsdrehung 38 der Spindelmutter 4 resultiert, was sich über das Zahnrad 16 entsprechend auf das Spindelmutterzahnrad 37 überträgt, welches sich dann auch in Drehrichtung 39 dreht. Über die Verzahnung mit dem Übersetzungszahnrad 17 wird dieses in eine entgegengesetzte Richtung 42 gedreht.

Das Übersetzungszahnrad 17 ist auf der motorzugewandten Seite mit einer Verzahnung 27 in einem Freilauf 28 so gelagert, dass die Linksdrehrichtung 42 des Übersetzungszahnrads 17 erlaubt ist. Auf der Drehachse 43 des Übersetzungszahnrads 17 ist ein Zahnrad 44 angeordnet, welches die Drehbewegung 42, das heißt die Bewegung der Spindelmutter in Richtung 38 über eine momentenschlüssige Verbindung, über ein Kronenrad 18 an den Wähltopf 19 weitergibt. Die Rechtsdrehung der Spindelmutter 4 in Richtung 38 wird dadurch in eine Rechtsdrehung des Wähltopfs 19 umgewandelt. Der rechtsumdrehende Wähltopf 19 dreht sich somit in Richtung 45 und transformiert mit Hilfe der auf seinem Umfang angeordneten Bahnkurve 22 und einer gehäusefesten Kulissenbahn 21 die Drehbewegung in Richtung 45 in eine Auf- und Abwärtsbewegung der Führungsstifte 20, die durch die Bahnkurve 22 in die Kulissenbahn 21 eingreifen und mit der Schaltwelle 7 verbunden sind. Die Verbindung der Führungsstifte 20 mit der Schaltwelle 7 ist hier über Verbindungsstellen 23 der Schaltwelle 7 realisiert. Diese Auf- und Abbewegung der Führungsstifte 20 entspricht damit einer Wählbewegung 24 des Schalthebels 8 in seiner neutralen Stellung. In dem hier dargestellten Fall verläuft die Kulissenbahn 21 parallel zur Schaltwelle 7. Die Bahnkurve 22 verläuft umfangsmäßig um den Wähltopf 19 herum in Art einer Zick-Zack-Kurve. Hier wäre auch eine Sinuskurve denkbar. In dem hier dargestellten Fall sind zwei Führungsstifte 20 vorgesehen, die in jeweils entgegengesetzt angeordneten Kulissenbahnen 21 eingreifen. Die Bahnkurve 22 ist daher so gestaltet, dass sie umfangsmäßig periodisch wiederkehrt und zwischen den beiden Kulissenbahnen 21 wenigstens eine ganzzahlige Periode der Bahnkurve 22 liegt. Auf diese Weise ist gewährleistet, dass die Bewegungsrichtung der beiden Führungsstifte 20 immer jeweils in die gleiche Richtung 24 zeigt.

Durch die Verbindung der Führungsstifte 20 mit der Schaltwelle 7 wird die gesamte Schaltfingereinheit, das heißt der Schalthebel 8, in der neutralen Gasse so lange gehoben oder gesenkt, das heißt es wird eine Wählbewegung 24 so lange ausgeübt, wie sich der Motor 2 im Rechtslauf 26 befindet. Über ein Sensor 29, welcher im Bereich der Verzahnung 27 am Freilauf 28 bereitgestellt ist, kann die Anzahl der Umdrehungen des Zahnrads 44 in Drehrichtung 42 überwacht werden. Da das Verhältnis zwischen Kronenrad 18 und Zahnrad 44 bezüglich der Übersetzung bekannt ist, kann aus der Anzahl der Umdrehungen des Übersetzungszahnrads 17 in Drehrichtung 42 direkt auf die Stellung der Führungsstifte 20 und damit auf die Position des Schalthebels 8 geschlossen werden. Bei Erreichen der Zielgasse, in diesem Fall in Figur 3b durch den Punkt zwischen dem dritten und dem siebten Gang, wird die Auf- und Abwärtsbewegung der Schaltwelle gestoppt. Jeder Zielpunkt in der Neutralgasse für den Schalthebel 8 kann dabei während der Wählbewegung 24 von oben oder unten angefahren werden. Durch das Übersetzungsverhältnis zwischen Spindelmutter 4 und Wähltopf 19 bzw. Kronenrad 18 entscheidet diese Anfahrtsrichtung über die winkelmäßige Stellung der Verzahnung 11 der Spindelmutter 4. Wie bereits angesprochen, entscheidet diese Winkelposition der Verzahnung 11 darüber, welches Zahnrad 5a oder 5b zum Verschwenken der Schaltwelle 7, das heißt zum Schalten des Schalthebels 8, betätigt wird. Hieraus resultiert dann das Einlegen des einen oder anderen Gangs, in diesem Fall zum Beispiel des dritten oder siebten Gangs, gemäß Figur 3b. Der Sensor 29 ermittelt daher die Position des Führungstopfs 19 und damit der Führungsstifte 20 exakt so, dass sowohl die Zielposition des Schalthebels 8, als auch die Winkelposition der Verzahnung 11 der Spindelmutter 4 in Abhängigkeit vom gewünschten nächsten Gang angefahren wird. Genau dann wird die Rotation 26 des Motors 2 angehalten.

Vor der Zielgasse wird die Motordrehrichtung von einer Rechtsdrehung 26 in eine Linksdrehung 31 umgeschaltet. Damit dreht auch die Spindel 3 nun auch in die zweite Richtung 14, das heißt nach links. Die Spindelmutter 4 könnte nun entweder mit der Spindel 3 mitdrehen, oder nach rechts verschoben werden. Über das Zahnrad 16 ist die Spindelmutter 4 über das Übersetzungszahnrad 17 und die Verzahnung 27 mit dem Freilauf 28 verbunden, welcher die Drehung des Übersetzungszahnrads 17 in eine Drehrichtung 46 entgegengesetzt zur Drehrichtung 42, das heißt nach rechts, verhindert, das heißt das Übersetzungszahnrad 17 und damit auch die Spindelmutter 4 gegen eine entsprechende Verdrehung sperrt. Eine Drehung der Spindelmutter 4 in Linksrichtung 47 ist somit nicht möglich und dieser rotatorische Freiheitsgrad der Spindelmutter 4 ist in diesem zweiten axialen Stellungsbereich 41, in dem die Spindelmutter 4 mit dem Zahnrad 16 gekoppelt ist, gesperrt. Sie kann daher bei einer Drehung 31 des Motors 2 nach links dieser Linksdrehung in die zweite Richtung 14 der Spindel 3 nicht folgen und kann nur rotatorisch in Richtung 48 nach rechts bewegt werden. Durch diese Sperrung des Übersetzungszahnrads 17 durch den Freilauf 28 wird entsprechend eine Drehmomentübertragung vom Motor 2 auf die Wählkinematik verhindert. Der Wähltopf 19 wird nicht verdreht, wodurch eine Wählbewegung 24 des Schalthebels 8 verhindert wird. Je nach gewünschtem Zielgang befindet sich die Verzahnung 11 der Spindelmutter 4 dann auf der von hinten gesehenen linken oder rechten Seite, wobei links ein Eingriff mit dem Zahnrad 5b und rechts ein Eingriff mit dem Zahnrad 5a möglich ist. Dieses ist so in Figur 2c dargestellt. Für den hier dargestellten Fall, dass als Zielgang der Gang drei durch die Elektronik bestimmt ist, ist der Motor 2 entsprechend so angehalten worden, dass sich der Schalthebel 8 in seiner Endposition in der Neutralgasse zwischen den Gängen drei und sieben befindet, während sich gleichzeitig die Winkelposition der Verzahnung 11 so ergibt, dass sie in das Zahnrad 5b zum Verschwenken der Schaltwelle 7 eingreifen kann. In den Figuren 1c, 2c und 3c ist nun dargestellt, wie die Umsetzung der Drehung des Motors 2 nach links 31 in ein Einlegen des Schalthebels 8 in die erste Richtung 13 zum Einlegen des dritten Gangs resultiert. Die translatorische Bewegung der Spindelmutter 4 in Richtung 48 resultiert in einer Verdrehung des linken Zahnrads 5b gemäß Figur 2c in die Papierebene hinein, das heißt in eine Drehrichtung 49 nach rechts in Bezug auf seine Drehachse. Durch die Verbindung zwischen Zahnrad 5b und Wellenrad 6 der Schaltwelle 7 resultiert diese Rechtsdrehung 49 nun wieder in eine Linksdrehung 35 des Wellenrads 6 und damit der Schaltwelle 7. Das rechte Zahnrad 5a ist dabei nicht mit der Verzahnung 11 der Spindelmutter 4 verbunden und dreht sich frei mit dem Wellenrad 6 mit. Die Verdrehung der Schaltwelle 7 in Drehrichtung 35 resultiert dann in einem Verschwenken des Schalthebels 8 in die erste Richtung 13, was bedeutet, dass der Schaltfinger des Schalthebels 8 eine hier nicht dargestellte Schaltschiene entsprechend bewegt und den neuen Gang 3 gemäß Figur 3c einlegt.

In den vorangegangenen Figuren wurde das Auslegen des ersten und Einlegen des dritten Gangs exemplarisch dargestellt. Hierbei wurde darauf verzichtet, die Funktion eines im Schalthebel 8 und in den nicht dargestellten Schaltschienen bereitgestellten "Active Interlocks"® explizit darzustellen. Hierdurch wird vor dem Einlegen eines neuen Gangs immer gewährleistet, dass alle übrigen Gänge ausgelegt sind. Des weiteren ist die Anordnung der einzelnen Zahnräder hier nur exemplarisch anzusehen. Insbesondere kann die Kopplung der Spindelmutter 4 mit dem Übersetzungszahnrad 17 auch auf der entgegengesetzten Seite der Schaltwelle 7 bzw. des Abstützelements 9 vorgesehen sein. Hieraus würde resultieren, dass die Spindelmutter 4 sich translatorisch nach rechts bewegen würde, um den Gang auszulegen und nach links, um einen Gang einzulegen. Des weiteren könnten die Sperrrichtungen von Abstützelement 9 bzw. Verdrehsicherung 9 und Freilauf 28 jeweils in entgegengesetzter Richtung wirken, wodurch sich im Wesentlichen nur die Drehrichtung des Wähltopfs 19 ändern würde.

Insgesamt wird auf einfache Weise realisiert, dass eine Drehung des Motors 2 in eine erste Drehrichtung 26 ein vollständiges Auslegen der eingelegten Gänge und ein Verfahren des Schalthebels 8 in die Neutralgasse, verbunden mit einem anschließenden Wählvorgang, durch eine Wählbewegung 24 des Schalthebels 8 bewirkt, während die Umkehrung der Drehung des Motors 2 in Richtung 31 wiederum das Einlegen des gewünschten Gangs durch den Schalthebel 8 bewirkt. Hierbei muss insbesondere auf die Funktion des Sensors 29 hingewiesen werden, welcher zusätzlich zu einem möglichen Sensor im Bereich des Motors 2 bereitgestellt sein muss, um hier über die Anzahl der Drehungen der Verzahnung 27, das heißt über die Umdrehungen des Wähltopfs 19, sowohl die genaue Position des Schalthebels 8 in der Neutralgasse, als auch die Winkelposition der Verzahnung 11 der Spindelmutter 4 zu bestimmen. Nur auf diese Weise kann exakt das Schalten des Schalthebels 8 in Richtung 13 für das Einlegen des gewünschten Gangs im richtigen Teilgetriebe gewährleistet werden.

### Bezugszeichenliste

- 1: Getriebeaktor
- 2: Motor
- 3: Spindel
- 4: Spindelmutter
- 5a,b: Zahnrad oder erstes Zahnrad
- 6: Wellenrad
- 7: Schaltwelle
- 8: Schalthebel
- 9: Abstützelement
- 10: Gehäuse
- 11: Verzahnung
- 12: erste Richtung
- 13: erste Richtung
- 14: zweite Richtung
- 15: Bewegung
- 16: Zahnrad bzw. weiteres oder zweites Zahnrad

- 17: Übersetzungszahnrad
- 18: Kronenrad
- 19: Wähltopf
- 20: Führungsstifte
- 21: Kulissenbahn
- 22: Bahnkurve
- 23: Verbindungsstelle
- 24: Wählbewegung
- 25: Stirnradverzahnung
- 26, 31: Drehung
- 27: Verzahnung
- 28: Freilauf
- 29: Sensor
- 30: Rotorwelle
- 32: Hohlradinnenverzahnung
- 33: Drehung
- 35: Drehung
- 37: Spindelmutterzahnrad
- 38: Drehung
- 39: Drehung
- 40: erster axialer Stellungsbereich
- 41: zweiter axialer Stellungsbereich
- 42: Drehrichtung
- 43: Drehachse
- 44: Zahnrad
- 45: Richtung
- 46: Drehrichtung
- 47: Linksrichtung
- 48: Richtung
- 49: Drehrichtung

## Patentansprüche

1. Getriebeaktor mit genau einem Motor (2),
einer von dem Motor (2), angetriebenen Spindel (3),
einer mit der Spindel (3) in Wirkverbindung stehenden Spindelmutter (4),
einer mit der Spindelmutter (4) wenigstens indirekt wirkverbundenen Schaltwelle (7), wobei die Spindelmutter (4) eine erste und eine zweite Bewegungsart aus der Menge rotative und translatorische Bewegungen ausführen kann, wobei die erste von der zweiten Bewegungsart verschieden ist,
umfassend weiter wenigstens ein Getriebe, mittels dessen die zweite Bewegungsart der Spindelmutter (4) in eine Schaltbewegung der Schaltwelle (7) umgewandelt wird **dadurch gekennzeichnet, dass**
das wenigstens eine Getriebe
die Spindelmutter (4), zwei erste Zahnräder (5a,5b) und ein Wellenrad (6), welches mit der Schaltwelle (7) verbunden ist und in einem ersten axialen Stellungsbereich (40) der Spindelmutter (4) eine translatorische Bewegung der Spindelmutter (4) über genau eines der ersten Zahnräder (5a,5b) in eine rotative Bewegung der Schaltwelle (7) als Schaltbewegung umwandelt,
aufweist.

2. Getriebeaktor nach Anspruch 1, **dadurch gekennzeichnet, dass** das wenigstens eine Getriebe die erste Bewegungsart der Spindelmutter (4) in eine Wählbewegung umwandelt.

3. Getriebeaktor nach Anspruch 2, **dadurch gekennzeichnet, dass** das wenigstens eine Getriebe
die Spindelmutter (4), ein Übersetzungszahnrad (17) und einen Wähltopf (19) mit einer auf seinem Umfang angeordneten periodischen Bahnkurve (22), die mit der Schaltwelle (7) wirkverbunden ist und in einem zweiten axialen Stellungsbereich (41) der Spindelmutter (4) eine rotative Bewegung der Spindelmutter (4) in eine im Wesentlichen periodisch wiederkehrende Heb- und Senkbewegung der Schaltwelle (7) längs der Achse der Schaltwelle (7) als Wählbewegung umwandelt,
aufweist.

4. Getriebeaktor nach Anspruch 1, **dadurch gekennzeichnet, dass** die ersten Zahnräder (5a,5b) voneinander entkoppelt sind, so dass in dem ersten axialen Stellungsbereich (40) immer nur genau ein erstes Zahnrad (5a,5b) in direkter oder indirekter Wirkverbindung mit der Spindelmutter (4) ist und eine Schaltbewegung der Schaltwelle (7) in eine Richtung (13) bewirkt, wobei das Verschwenken des ersten Zahnrades (5a) ein Verschwenken der Schaltwelle in eine erste Richtung (13) und das Verschwenken des zweiten Zahnrades (5b) ein Verschwenken der Schaltwelle (7) in ein zweite Richtung, entgegengesetzt zur ersten Richtung (13) bewirkt.

5. Getriebeaktor nach Anspruch 4, **dadurch gekennzeichnet, dass** die Spindelmutter (4) als Zahnstange mit einer Verzahnung (11) ausgebildet ist, wobei sich die Verzahnung (11) über einen Teilumfang der Spindelmutter (4) umfangsmäßig so erstreckt, dass die Spindelmutter (4) wenigstens zwei unterschiedliche Winkelpositionen einnehmen kann, in denen die Verzahnung (11) bei einer translatorischen Bewegung der Spindelmutter (4) ausschließlich in das eine oder das andere erste Zahnrad (5a, 5b) eingreift.

6. Getriebeaktor nach einem der der Ansprüche 3 bis 5, **dadurch gekennzeichnet, dass** eine Verdrehsicherung (9) vorgesehen ist, mittels welcher die Spindelmutter (4) in dem ersten axialen Stellungsbereich (40) gegenüber einem Gehäuse (10) gegen Verdrehungen gesichert ist, wobei die Spindelmutter (4) in diesem ersten axialen Stellungsbereich (40) axialbeweglich ist, und dass die Spindelmutter (4) in dem zweiten axialen Stellungsbereich (41), der außerhalb des ersten axialen Stellungsbereichs (40) gelegen ist, bei einer Drehung der Spindel (3) in einer ersten der beiden Drehrichtungen mit dieser Spindel (3) mitdreht, ohne dabei gegenüber der Spindel (3) axial zu wandern.

7. Getriebeaktor nach einem der Ansprüche 3 bis 6, **dadurch gekennzeichnet, dass** ein Freilauf (28) vorgesehen ist, der die Spindelmutter (4) in dem zweiten axialen Stellungsbereich (40) auf der Spindel (3) an einer rotative Bewegung in eine zweite Drehrichtung hindert, so dass eine rotative Bewegung der Spindelmutter (4) zur Bewirkung der Wählbewegung der Schaltwelle (7) ausschließlich nur in einer ersten Drehrichtung möglich ist.

8. Getriebeaktor nach Anspruch 6 oder 7, **dadurch gekennzeichnet, dass** die Spindelmutter (4) in dem zweiten axialen Stellungsbereich (41) auf der Spindel (3) über ein Übersetzungszahnrad (17) mit einem Freilauf (28) gekoppelt ist, bei einer Rotation der Spindel (3) in eine zweite Richtung der Freilauf (28) die Spindelmutter (4) gegen eine Rotationsbewegung abstützt und als Verdrehsicherung wirkt, so dass durch die Rotation der Spindel (3) in die zweite Richtung eine axiale Bewegung der Spindelmutter (4) von dem zweiten axialen Stellungsbereich (41) in den ersten axialen Stellungsbereich (40) auf der Spindel (3) bewirkt wird.

9. Getriebeaktor nach einem der Ansprüche 3 bis 7, **dadurch gekennzeichnet, dass** wenigstens ein Sensor (29) vorgesehen ist, der die Stellung eines der Elemente Übersetzungszahnrad (17), Spindelmutter (4) oder eines zwischen diesen Elementen und mit diesen gekoppelten Organs erfasst und so ein Signal für die axiale Position der Schaltwelle (7), bzw. eines Schalthebels (8) der Schaltwelle (7) in Bezug auf eine Zielgasse und/oder ein Signal für die umfangsmäßige Positionierung der Verzahnung (11) in Bezug auf die ersten Zahnräder (5a,5b) erzeugt, welches für die Steuerung des Motors (2) verwendet werden kann um gezielt einen ausgewählten Gang mittels des Schalthebels (8) einzulegen, indem der Schalthebel (8) in der ausgewählten Gasse gelassen wird und mittels der Spindelmutter (4) in genau eines der ersten Zahnräder (5a,5b) zur Verschwenkung des Schalthebels (8) in die gewünschte Richtung zur Schaltung des gewünschten Ganges eingegriffen wird.

10. Getriebeaktor nach einem der Ansprüche 3 bis 7, **dadurch gekennzeichnet, dass** das Getriebe zur Umwandlung der Bewegungsart der Spindelmutter (4) ein Übersetzungszahnrad (17) umfasst, welches in dem zweiten axialen Stellungsbereich (41) vorzugsweise über ein zweites Zahnrad (16) momentenschlüssig mit der Spindelmutter (4) verbunden werden kann,
das Übersetzungszahnrad (17) vorzugsweise mit einem Übersetzungsverhältnis von 2:1 mit einer Verzahnung, vorzugsweise einem Kronenrad, mit dem Wähltopf (19) verbunden ist, wodurch eine Rotation der Spindelmutter in die erste Drehrichtung ein Drehung des Wähltopfes (19) um die Schaltwelle (7) herum bewirkt,
der Wähltopf (19) um seine Achse herum verdreht werden kann, wobei diese Achse koaxial zur Achse der Schaltwelle (7) verläuft und vorzugsweise mit dieser zusammenfällt,
die Schaltwelle (7) mittels Führungsstiften (20), die durch die periodische Bahnkurve des Wähltopfes (19) hindurchgreifen mit dem Wähltopf gekoppelt ist, und
eine gehäusefeste Kulissenbahn (21) vorgesehen ist, in die Führungsstifte (20) eingreifen, wodurch durch die Überlagerung der Bewegungen der Führungsstifte (20) in der Bahnkurve (22) und in der Kulissenbahn (21) die Drehbewegung der Spindelmutter (4) in eine Heb- und Senkbewegung (24) der Schaltwelle (7) in Längsrichtung der Schaltwelle (7) transformiert wird.

11. Getriebeaktor nach einem der vorigen Ansprüche, **dadurch gekennzeichnet, dass** zusätzlich oder alternativ zu einer Schaltung eines Ganges in einem Getriebe mittels des Schalthebels eine Kupplung oder eine Bremse betätigt wird.

12. Verfahren zur Ansteuerung eines Getriebeaktors (1) nach den Ansprüchen 1 bis 3 oder nach den Ansprüchen 1 bis 3 und wenigstens einem der Ansprüche 4 bis 11, **dadurch gekennzeichnet, dass** die folgenden Verfahrensschritte durchgeführt werden; wenn ein neuer Gang gewählt wird:
i) Auslegen des bisherigen Ganges, indem,
der Motor (2) des Getriebeaktors so angesteuert wird, dass er zunächst die Spindel (3) in eine erste Drehrichtung (12) antreibt,
wobei die Spindelmutter (4) in einem ersten axialen Stellungsbereich (40) durch eine Verdrehsicherung (9) gegen Verdrehungen gesichert ist und axial auf der Spindel (3) wandert und mit einem ersten Zahnrad (5a,5b) so in Eingriff steht, dass durch die axiale Bewegung der Spindelmutter (4) das erste Zahnrad (5a,5b) die Schaltwelle (7) und darüber einen Schalthebel (8) an der Schaltwelle (7) so verschwenkt, dass der eingelegte Gang ausgelegt wird und der Schalthebel (8) in eine Neutralgasse verlagert wird,
ii) Verfahren des Schalthebels (8) in eine Gasse mit dem gewählten neuen Gang, indem
der Motor (2) nachdem der Gang ausgelegt wurde so angesteuert wird, dass er die Spindel (3) weiter in die erste Drehrichtung (12) antreibt, so dass die Spindelmutter (4) aus dem ersten axialen Stellungsbereich (40) in einen zweiten axialen Stellungsbereich (41) ohne Verdrehsicherung (9) axial verlagert wird,
die Spindelmutter (4) im zweiten axialen Stellungsbereich (41) einen Momentenschluss mit einem zweiten Zahnrad (16) eingeht,
die Drehung der Spindelmutter (4) über das zweite Zahnrad (16), ein mit diesem verzahnten Übersetzungszahnrad (17) und ein Kronenrad (18) auf einen Wähltopf (19) übertragen wird,
die Drehbewegung des Wähltopfes (19) eine periodische Heb- und Senkbewegung der Schaltwelle (7) längs der Achse der Schaltwelle (7) über Führungsstifte (20) bewirkt,
und so der Schalthebel (8) axial mit der Schaltwelle (7) in die Gasse des gewählten neuen Ganges verlagert wird, wobei die Steuerung in Abhängigkeit eines Sensorsignals eines Sensors (29) die Stellung des Schalthebels (8) in der Gasse des gewählten Ganges erkennt,
iii) Einlegen des gewählten neuen Ganges, indem
in Abhängigkeit von der Lage des gewählten Ganges in Bezug auf die Schaltwelle (7)
der Motor (2) so angesteuert wird, dass er die Spindel (3) so in die erste Drehrichtung (12) antreibt, dass Spindelmutter (4) so verdreht wird, dass ihre Winkellage der einer Position entspricht, bei der eine Verzahnung (11) der Spindelmutter (4) in dem ersten axialen Stellungsbereich (40) mit genau einem der ersten Zahnräder (5a,5b) in Eingriff kommen kann, welches ein Verschwenken der Schaltwelle (7) und damit des Schalthebels (8) in Richtung des gewählten neuen Ganges bewirken kann,
die Drehrichtung des Motors (2) in die entgegengesetzte Richtung zur ersten Drehrichtung (12) umgestellt wird, so dass die Spindelmutter (4) auf Grund eines Freilaufs (28) an dem Übersetzungszahnrad (17) an einer Verdrehung gehindert und infolgedessen axial in Richtung des ersten axialen Stellungsbereichs (40) verlagert wird und dort über einen Eingriff der Verzahnung (11) in das besagte erste Zahnrad (5a,5b) ein Verschwenken des Schalthebels (8) zum Einlegen des neuen gewählten Ganges bewirkt.

## Claims

1. Transmission actuator having precisely one motor (2),
a spindle (3) which is driven by the motor (2),
a spindle nut (4) which is operatively connected to the spindle (3),
a shifting shaft (7) which is operatively connected at least indirectly to the spindle nut (4),
it being possible for the spindle nut (4) to carry out a first and a second movement type from the group of rotational and translational movements, the first movement type being different from the second movement type,
further comprising at least one gear mechanism, by means of which the second movement type of the spindle nut (4) is converted into a shifting movement of the shifting shaft (7),
**characterized in that**
the at least one gear mechanism has
the spindle nut (4), two first gearwheels (5a, 5b) and a shaft gear (6) which is connected to the shifting shaft (7) and, in a first axial positional region (40) of the spindle nut (4), converts a translational movement of the spindle nut (4) via precisely one of the first gearwheels (5a, 5b) into a rotational movement of the shifting shaft (7) as a shifting movement.

2. Transmission actuator according to Claim 1,
**characterized in that** the at least one gear mechanism converts the first movement type of the spindle nut (4) into a selecting movement.

3. Transmission actuator according to Claim 2,
**characterized in that** the at least one gear mechanism has the spindle nut (4), a step-up gearwheel (17) and a selector pot (19) with a periodic track cam (22) which is arranged on its circumference, is operatively connected to the shifting shaft (7), and, in a second axial positional region (41) of the spindle nut (4), converts a rotational movement of the spindle nut (4) into a substantially periodically recurring lifting and lowering movement of the shifting shaft (7) along the axis of the shifting shaft (7) as a selecting movement.

4. Transmission actuator according to Claim 1,
**characterized in that** the first gearwheels (5a, 5b) are decoupled from one another, with the result that, in the first axial positional region (40), only precisely one first gearwheel (5a, 5b) is always operatively connected directly or indirectly to the spindle nut (4) and brings about a shifting movement of the shifting shaft (7) in one direction (13), the pivoting of the first gearwheel (5a) bringing about pivoting of the shifting shaft in a first direction (13), and the pivoting of the second gearwheel (5b) bringing about pivoting of the shifting shaft (7) in a second direction, opposite to the first direction (13).

5. Transmission actuator according to Claim 4,
**characterized in that** the spindle nut (4) is configured as a rack with a toothing system (11), the toothing system (11) extending circumferentially over a part circumference of the spindle nut (4) in such a way that the spindle nut (4) can assume at least two different angular positions, in which, in the case of a translational movement of the spindle nut (4), the toothing system (11) engages exclusively into the one or the other first gearwheel (5a, 5b).

6. Transmission actuator according to one of Claims 3 to 5, **characterized in that** an anti-rotation safeguard (9) is provided, by means of which the spindle nut (4) is secured in the first axial positional region (40) against rotations with respect to a housing (10), the spindle nut (4) being axially movable in the said first axial positional region (40), and **in that**, in the case of a rotation of the spindle (3) in a first one of the two rotational directions, the spindle nut (4) corotates with the said spindle (3) in the second axial positional region (41) which is situated outside the first axial positional region (40), without the said spindle nut (4) migrating axially with respect to the spindle (3) in the process.

7. Transmission actuator according to one of Claims 3 to 6, **characterized in that** a freewheel (28) is provided which prevents the spindle nut (4) from a rotational movement in a second rotational direction in the second axial positional region (40) on the spindle (3), with the result that a rotational movement of the spindle nut (4) for bringing about the selecting movement of the shifting shaft (7) is possible exclusively only in a first rotational direction.

8. Transmission actuator according to Claim 6 or 7,
**characterized in that**, in the second axial positional region (41) on the spindle (3), the spindle nut (4) is coupled via a step-up gearwheel (17) to a freewheel (28), and the freewheel (28) supports the spindle nut (4) counter to a rotational movement in the case of a rotation of the spindle (3) in a second direction and acts as an anti-rotation safeguard, with the result that an axial movement of the spindle nut (4) from the second axial positional region (41) into the first axial positional region (40) on the spindle (3) is brought about by way of the rotation of the spindle (3) in the second direction.

9. Transmission actuator according to one of Claims 3 to 7, **characterized in that** at least one sensor (29) is provided which detects the position of one of the elements of step-up gearwheel (17), spindle nut (4) or a member which is coupled between the said elements and to them, and thus generates a signal for the axial position of the shifting shaft (7) or of a shifting lever (8) of the shifting shaft (7) in relation to a target gate and/or a signal for the circumferential positioning of the toothing system (11) in relation to the first gearwheels (5a, 5b), which signal can be used for the control of the motor (2), in order to engage a selected gear in a targeted manner by means of the shifting lever (8), by the shifting lever (8) being allowed in the selected gate and being engaged by means of the spindle nut (4) into precisely one of the first gearwheels (5a, 5b) in order to pivot the shifting lever (8) in the desired direction in order to shift the desired gear.

10. Transmission actuator according to one of Claims 3 to 7, **characterized in that**, in order to convert the movement type of the spindle nut (4), the transmission comprises a step-up gearwheel (17) which, in the second axial positional region (41), can preferably be connected to the spindle nut (4) via a second gearwheel (16) in a torque-locking manner,
the step-up gearwheel (17) is preferably connected with a transmission ratio of 2:1 to the selector pot (19) by way of a toothing system, preferably a crown gear, as a result of which a rotation of the spindle nut in the first rotational direction brings about a rotation of the selector pot (19) around the shifting shaft (7), the selector pot (19) can be rotated around its axis, the said axis running coaxially with respect to the axis of the shifting shaft (7) and preferably coinciding with the said axis,
the shifting shaft (7) is coupled to the selector pot by means of guide pins (20) which engage through the periodic track cam of the selector pot (19), and a slotted guide track (21) which is fixed to the housing is provided, into which slotted guide track (21) the guide pins (20) engage, as a result of which, by way of the superimposition of the movements of the guide pins (20) in the track cam (22) and in the slotted guide track (21), the rotational movement of the spindle nut (4) is transformed into a lifting and lowering movement (24) of the shifting shaft (7) in the longitudinal direction of the shifting shaft (7).

11. Transmission actuator according to one of the preceding claims, **characterized in that**, in addition or as an alternative to a shift of a gear in a transmission by means of the shifting lever, a clutch or a brake is actuated.

12. Method for actuating a transmission actuator (1) according to Claims 1 to 3 or according to Claims 1 to 3 and at least one of Claims 4 to 11, **characterized in that** the following method steps are carried out; if a new gear is selected:
i) disengaging of the previous gear, by the motor (2) of the transmission actuator being actuated in such a way that it first of all drives the spindle (3) in a first rotational direction (12), the spindle nut (4) being secured against rotations by way of an anti-rotation safeguard (9) in a first axial positional region (40), and migrating axially on the spindle (3) and being in engagement with a first gearwheel (5a, 5b) in such a way that, by way of the axial movement of the spindle nut (4), the first gearwheel (5a, 5b) pivots the shifting shaft (7) and, via it, a shifting lever (8) on the shifting shaft (7) in such a way that the engaged gear is disengaged and the shifting lever (8) is moved into a neutral gate,
ii) moving of the shifting lever (8) into a gate with the selected new gear, by the motor (2) being actuated, after the gear has been disengaged, in such a way that it drives the spindle (3) further in the first rotational direction (12), with the result that the spindle nut (4) is moved axially out of the first axial positional region (40) into a second axial positional region (41) without an anti-rotation safeguard (9), the spindle nut (4) entering into a torque-locking connection with a second gearwheel (16) in the second axial positional region (41),
the rotation of the spindle nut (4) being transmitted to a selector pot (19) via the second gearwheel (16), a step-up gearwheel (17) which is in toothed connection with it, and a crown gear (18),
the rotational movement of the selector pot (19) bringing about a periodic lifting and lowering movement of the shifting shaft (7) along the axis of the shifting shaft (7) via guide pins (20), and the shifting lever (8) thus being moved axially with the shifting shaft (7) into the gate of the selected new gear, the controller detecting the position of the shifting lever (8) in the gate of the selected gear in a manner which is dependent on a sensor signal of a sensor (29),
iii) engaging of the selected new gear, by the motor (2) being actuated in a manner which is dependent on the position of the selected gear in relation to the shifting shaft (7), in such a way that it drives the spindle (3) into the first rotational direction (12) in such a way that the spindle nut (4) is rotated in such a way that its angular position corresponds to the one position, in the case of which a toothing system (11) of the spindle nut (4) can come into engagement in the first axial positional region (40) with precisely one of the first gearwheels (5a, 5b) which can bring about pivoting of the shifting shaft (7) and therefore of the shifting lever (8) in the direction of the selected new gear,
the rotational direction of the motor (2) being adjusted in the opposite direction to the first rotational direction (12), with the result that, on account of a freewheel (28) on the step-up gearwheel (17), the spindle nut (4) is prevented from rotating and, as a consequence, is moved axially in the direction of the first axial positional region (40) and brings about pivoting of the shifting lever (8) there in order to engage the new selected gear via an engagement of the toothing system (11) into the said first gearwheel (5a, 5b).

## Revendications

1. Actionneur de boîte de vitesses avec exactement un moteur (2),
une broche (3) entraînée par le moteur (2),
un écrou de broche (4) en liaison active avec la broche (3),
un arbre de changement de vitesse (7) en liaison active au moins indirectement avec l'écrou de broche (4),
dans lequel l'écrou de broche (4) peut exécuter un premier et un second types de mouvement parmi l'ensemble de mouvements de rotation et de translation, dans lequel le premier type de mouvement est différent du second type de mouvement,
comprenant en outre au moins une boîte de vitesses, au moyen de laquelle le second type de mouvement de l'écrou de broche (4) est converti en un mouvement de changement de vitesse de l'arbre de changement de vitesse (7), **caractérisé en ce que** ladite au moins une boîte de vitesses présente
l'écrou de broche (4), deux premières roues dentées (5a, 5b) et une roue d'arbre (6), qui est assemblée à l'arbre de changement de vitesse (7) et qui dans une première plage axiale (40) de positions de l'écrou de broche (4) convertit un mouvement de translation de l'écrou de broche (4) au moyen d'exactement une des premières roues dentées (5a, 5b) en un mouvement de rotation de l'arbre de changement de vitesse (7) en tant que mouvement de changement de vitesse.

2. Actionneur de boîte de vitesse selon la revendication 1, **caractérisé en ce que** ladite au moins une boîte de vitesses convertit le premier type de mouvement de l'écrou de broche (4) en un mouvement de sélection.

3. Actionneur de boîte de vitesses selon la revendication 2, **caractérisé en ce que** ladite au moins une boîte de vitesses présente l'écrou de broche (4), une roue dentée de transmission (17) et une cuvette de sélection (19) avec une piste incurvée périodique (22) disposée sur sa périphérie, qui est en liaison active avec l'arbre de changement de vitesse (7) et qui dans une deuxième plage axiale (41) de positions de l'écrou de broche (4) convertit un mouvement de rotation de l'écrou de broche (4) en un mouvement essentiellement en va-et-vient périodique de levée et de descente de l'arbre de changement de vitesse (7) le long de l'axe de l'arbre de changement de vitesse (7) en tant que mouvement de sélection.

4. Actionneur de boîte de vitesses selon la revendication 1, **caractérisé en ce que** les premières roues dentées (5a, 5b) sont découplées l'une de l'autre, de telle manière que dans la première plage axiale de positions (40) seule exactement une première roue dentée (5a, 5b) soit en liaison active directe ou indirecte avec l'écrou de broche (4) et provoque un mouvement de changement de vitesse de l'arbre de changement de vitesse (7) dans une direction (13), dans lequel le pivotement de la première roue dentée (5a) entraîne un pivotement de l'arbre de changement de vitesse dans une première direction (13) et que le pivotement de la deuxième roue dentée (5b) entraîne un pivotement de l'arbre de changement de vitesse (7) dans une deuxième direction, opposée à la première direction (13).

5. Actionneur de boîte de vitesses selon la revendication 4, **caractérisé en ce que** l'écrou de broche (4) est réalisé sous la forme d'une crémaillère avec une denture (11), dans lequel la denture (11) s'étend sur une partie de la périphérie de l'écrou de broche (4) de telle manière que l'écrou de broche (4) puisse prendre au moins deux positions angulaires différentes, dans lesquelles la denture (11) s'engage exclusivement dans l'une ou dans l'autre première roue dentée (5a, 5b) lors d'un mouvement de translation de l'écrou de broche (4).

6. Actionneur de boîte de vitesses selon l'une quelconque des revendications 3 à 5, **caractérisé en ce qu'**il est prévu un blocage de rotation (9), au moyen duquel l'écrou de broche (4) est empêché de tourner dans la première plage axiale de positions (40) par rapport à un carter (10), dans lequel l'écrou de broche (4) peut se déplacer axialement dans cette première plage axiale de positions (40) et **en ce que** dans une deuxième plage axiale de positions (41), qui est située à l'extérieur de la première plage axiale de positions (40), l'écrou de broche (4) tourne en compagnie de la broche (3) lors d'une rotation de la broche (3) dans une première des deux directions de rotation, en l'occurrence sans se déplacer axialement par rapport à la broche (3).

7. Actionneur de boîte de vitesses selon l'une quelconque des revendications 3 à 6, **caractérisé en ce qu'**il est prévu une roue libre (28), qui empêche l'écrou de broche (4) de se déplacer sur la broche (3) en rotation dans une deuxième direction de rotation dans la deuxième plage axiale de positions (40) de telle manière qu'un mouvement de rotation de l'écrou de broche (4) pour entraîner un mouvement de sélection de l'arbre de changement de vitesse (7) ne soit possible exclusivement que dans une seule direction de rotation.

8. Actionneur de boîte de vitesses selon la revendication 6 ou 7, **caractérisé en ce que** dans la deuxième plage axiale de positions (41) sur la broche (3) l'écrou de broche (4) est couplé à une roue libre (28) par l'intermédiaire d'une roue dentée de transmission (17), **en ce que** lors d'une rotation de la broche (3) dans une deuxième direction la roue libre (28) bloque l'écrou de broche (4) contre un mouvement de rotation et agit comme blocage de rotation, de telle manière que la rotation de la broche (3) dans la deuxième direction entraîne un mouvement axial de l'écrou de broche (4) sur la broche (3) de la deuxième plage axiale de positions (41) à la première plage axiale de positions (40).

9. Actionneur de boîte de vitesses selon l'une quelconque des revendications 3 à 7, **caractérisé en ce qu'**il est prévu au moins un capteur (29), qui saisit la position d'un des éléments que sont la roue dentée de transmission (17) et l'écrou de broche (4) ou d'un organe disposé entre ces éléments et couplé à ceux-ci et qui produit ainsi un signal de la position axiale de l'arbre de changement de vitesse (7) ou d'un levier de changement de vitesse (8) de l'arbre de changement de vitesse (7) par rapport à un rapport visé et/ou un signal de positionnement périphérique de la denture (11) par rapport aux premières roues dentées (5a, 5b), qui peut être utilisé pour la commande du moteur (2) afin d'engager de façon contrôlée un rapport sélectionné au moyen du levier de changement de vitesse (8), par le fait que le levier de changement de vitesse (8) est laissé dans le rapport sélectionné et est engagé au moyen de l'écrou de broche (4) dans exactement une des premières roues dentées (5a, 5b) pour faire pivoter le levier de changement de vitesse (8) dans la direction désirée en vue d'engager le rapport souhaité.

10. Actionneur de boîte de vitesses selon l'une quelconque des revendications 3 à 7, **caractérisé en ce que** la boîte de vitesses comprend, pour la conversion du type de mouvement de l'écrou de broche (4), une roue dentée de transmission (17) qui peut être reliée dans la deuxième plage axiale de positions (41) de préférence par une deuxième roue dentée (16) à l'écrou de broche (4) de façon à transmettre un couple de rotation, **en ce que** la roue dentée de transmission (17) est reliée, de préférence avec un rapport de transmission de 2:1, à une denture, de préférence à une couronne dentée, à la cuvette de sélection (19), une rotation de l'écrou de broche dans la première direction de rotation entraînant ainsi une rotation de la cuvette de sélection (19) autour de l'arbre de changement de vitesse (7), **en ce que** la cuvette de sélection (19) peut être tournée autour de son axe, dans lequel cet axe s'étend coaxialement à l'axe de l'arbre de changement de vitesse (7) et coïncide de préférence avec celui-ci, **en ce que** l'arbre de changement de vitesse (7) est couplé à la cuvette de sélection (19) au moyen de tiges de guidage (20), qui traversent la piste incurvée périodique de la cuvette de sélection (19), et **en ce qu'**il est prévu une coulisse (21) solidaire du carter, dans laquelle s'engagent les tiges de guidage (20), la superposition des mouvements des tiges de guidage (20) dans la piste incurvée (22) et dans la coulisse (21) transformant le mouvement de rotation de l'écrou de broche (4) en un mouvement réciproque (24) de l'arbre de changement de vitesse (7) dans la direction longitudinale de l'arbre de changement de vitesse (7).

11. Actionneur de boîte de vitesses selon l'une quelconque des revendications précédentes, **caractérisé en ce qu'**en plus ou en variante d'un changement de rapport dans une boîte de vitesses au moyen du levier de changement de vitesse on actionne un embrayage ou un frein.

12. Procédé de commande d'un actionneur de boîte de vitesses (1) selon les revendications 1 à 3 ou selon les revendications 1 à 3 et au moins une des revendications 4 à 11, **caractérisé en ce que** l'on exécute les opérations suivantes lorsque l'on sélectionne un nouveau rapport:
i) désengager le rapport précédent en commandant le moteur (2) de l'actionneur de boîte de vitesses de telle manière qu'il entraîne d'abord la broche (3) dans une première direction de rotation (12),
dans lequel l'écrou de broche (4) est bloqué en rotation dans une première plage axiale de positions (40) par un blocage de rotation (9) et il se déplace axialement sur la broche (3) et il vient ainsi engrener avec une première roue dentée (5a, 5b), de telle manière que par le mouvement axial de l'écrou de broche (4) la première roue dentée (5a, 5b) fasse pivoter l'arbre de changement de vitesse (7) et en outre un levier de changement de vitesse (8) sur l'arbre de changement de vitesse (7), de telle manière que le rapport engagé soit désengagé et que le levier de changement de vitesse (8) soit amené dans une position neutre,
ii) déplacer le levier de changement de vitesse (8) dans une position conforme au nouveau rapport sélectionné, par le fait que le moteur (2) a été commandé, après que le rapport ait été désengagé, de telle manière qu'il entraîne la broche (3) encore dans la première direction de rotation (12), de telle manière que l'écrou de broche (4) soit déplacé axialement de la première plage axiale de positions (40) à une deuxième plage axiale de positions (41) sans blocage de rotation (9),
l'écrou de broche (4) dans la deuxième plage axiale de positions (41) est engagé avec une deuxième roue dentée (16) en pouvant transmettre un couple de rotation,
la rotation de l'écrou de broche (4) est transmise par la deuxième roue dentée (16), une roue dentée de transmission (17) en prise avec celle-ci et une couronne dentée (18) à une cuvette de sélection (19),
le mouvement de rotation de la cuvette de sélection (19) provoque un mouvement réciproque périodique de l'arbre de changement de vitesse (7) le long de l'axe de l'arbre de changement de vitesse (7) par l'intermédiaire de tiges de guidage (20),
et ainsi le levier de changement de vitesse (8) est déplacé axialement avec l'arbre de changement de vitesse (7) dans la position conforme au nouveau rapport sélectionné, dans lequel la commande reconnaît, en fonction d'un signal de capteur d'un capteur (29), la position du levier de changement de vitesse (8) dans la position du rapport sélectionné,
iii) engager le nouveau rapport sélectionné, par le fait que l'on commande le moteur (2) en fonction de la position du rapport sélectionné par rapport à l'arbre de changement de vitesse (7), de telle manière qu'il entraîne la broche (3) dans la première direction de rotation (12), de telle manière que l'écrou de broche (4) tourne de telle manière que sa position angulaire corresponde à une position, pour laquelle une denture (11) de l'écrou de broche (4) peut venir engrener dans la première plage axiale de positions (40) avec exactement une des premières roues dentées (5a, 5b), qui peut entraîner un pivotement de l'arbre de changement de vitesse (7) et dès lors du levier de changement de vitesse (8) en direction du nouveau rapport sélectionné,
la direction de rotation du moteur (2) est inversée dans la direction opposée à la première direction de rotation (12), de telle manière que l'écrou de broche (4) soit, en raison d'une roue libre (28) sur la roue dentée de transmission (17), empêché de tourner et qu'il soit par conséquent déplacé axialement en direction de la première plage axiale de positions (40) et qu'il y entraîne, par l'intermédiaire d'un engagement de la denture (11) dans ladite première roue dentée (5a, 5b), un
pivotement du levier de changement de vitesse (8) pour engager le nouveau rapport sélectionné.
